(19) **Europäisches Patentamt European Patent Office Office européen des brevets**

(11) **EP 4 670 941 A1**

(12) **EUROPEAN PATENT APPLICATION**
published in accordance with Art. 153(4) EPC

(43) Date of publication:
**31.12.2025 Bulletin 2026/01**

(21) Application number: **24868324.5**

(22) Date of filing: **19.09.2024**

(51) International Patent Classification (IPC):
**B29B 11/14** (2006.01)    **B29B 17/02** (2006.01)
**B29C 48/00** (2019.01)

(52) Cooperative Patent Classification (CPC):
**B29B 11/14; B29B 17/02; B29C 48/00;** Y02W 30/62

(86) International application number:
**PCT/JP2024/033521**

(87) International publication number:
**WO 2025/063247 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 PCT/JP2023/034518**

(71) Applicant: **LIXIL Corporation
Tokyo 141-0033 (JP)**

(72) Inventors:
• **KANAMORI, Hiroyuki
Tokyo 141-0033 (JP)**
• **KUMANO, Takashi
Tokyo 141-0033 (JP)**
• **OKAMOTO, Takahiro
Tokyo 141-0033 (JP)**
• **KASE, Takahiro
Tokyo 141-0033 (JP)**
• **UOZUMI, Naohiro
Tokyo 141-0033 (JP)**
• **YAO, Takashi
Tokyo 141-0033 (JP)**

(74) Representative: **Grünecker Patent- und
Rechtsanwälte
PartG mbB
Leopoldstraße 4
80802 München (DE)**

(54) **METHOD FOR PRODUCING RESIN COMPOSITION MOLDED BODY AND METHOD FOR PRODUCING RESIN COMPOSITION POWDER FOR RESIN COMPOSITION MOLDED BODY PRODUCTION**

(57) A method for producing a resin composition molded body according to the present disclosure comprises: preparing a plastic waste that includes at least one of waste plastic residues derived from general waste, a waste plastic derived from industrial waste, and a waste plastic derived from marine plastic waste, and that contains a low melting point resin having a melting point in the range of not lower than 80°C but lower than 190°C and a non-low melting point resin including a thermosetting resin and/or a high melting point resin having a melting point not lower than 190°C; subjecting the plastic waste or a crushed material obtained by crushing the plastic waste to a treatment for removing magnetic substances and a water-washing treatment; pulverizing the plastic waste or the crushed material after the water-washing treatment to obtain a resin composition powder; and molding the resin composition powder to obtain the resin composition molded body.

FIG. 1

EP 4 670 941 A1

**Description**

TECHNICAL FIELD

The present disclosure relates to a method for producing a resin composition molded body and a method for producing a resin composition powder for production of a resin composition molded body.

BACKGROUND ART

Wood resin composition molded bodies having a cellulose-based material powder such as wood powder dispersed into resin are also called wood plastics, and have a texture close to that of wood and also advantages such as resistance to decay, cracking, splintering, and being lightweight compared to wood. Because of this, wood resin composition molded bodies have been widely used as materials such as building materials. It has been investigated to use a low melting point resin such as polypropylene derived from waste as the resin for wood resin composition molded bodies (see e.g. Patent Document 1, Patent Document 2 and Non-Patent Document 1).

Citation List

Patent Document

    Patent Document 1: Japanese Unexamined Patent Application, Publication No. 2001-353707
    Patent Document 2: Japanese Unexamined Patent Application, Publication No. 2005-66952

Non-Patent Document

Non-Patent Document 1: Flowchart of plastic products, plastic waste and resource recovery 2020, Plastic Waste Management Institute,https://www.pwmi.or.jp/flow_pdf/flow2020.pdf

DISCLOSURE OF THE INVENTION

Problems to be Solved by the Invention

It is desired to utilize plastic waste which includes waste plastic as a resin raw material for a resin composition molded body from the viewpoint of promoting resource circulation and largely contributing to the reduction of $CO_2$ emissions by burning waste. It has been however common conventionally that among plastic waste, only low melting point resin which is easily thermally molded is separated and recovered, and used. The separated and recovered low melting point resin can be thermally molded and is thus used as recycled resin for material recycling. In waste plastic residues which remain after separating and recovering the low melting point resin, meanwhile, the ratio of non-low melting point resin such as high melting point resin or thermosetting resin increases, and thermal molding becomes difficult. Because of this, utilization other than thermal recycling is difficult for waste plastic residues. Therefore, the material recycling rate of plastic waste is low in Japan. In recent years, a demand to increase the material recycling rate of plastic waste has increased. However, the present inventors have investigated and found a problem that for waste plastic residues derived from general waste, waste plastic derived from industrial waste and waste plastic derived from marine plastic waste, thermal molding becomes difficult due to contamination by inorganic substances such as magnetic substances and organic substances such as fat and oil, food residues and surfactants. The inorganic substances have a risk to damage production facilities for producing a resin composition molded body and inhibit continuous production of the resin composition molded body. The organic substances have a risk to be a nutritional source for microorganisms such as mold and bacteria to promote the proliferation of microorganisms and thus it is important to reduce the amount of contamination. Because the organic substances have a high affinity with waste plastic, a step is required to reduce the amount of contamination by organic substances attached to the waste plastic to an extent which can suppress the proliferation of microorganisms.

An object of the present disclosure is to provide a method for producing a resin composition molded body, which can be effectively utilized even when plastic waste including a low melting point resin and a non-low melting point resin is contaminated with inorganic substances such as magnetic substances and organic substances such as oil and fat, food residues and surfactants.

Means for Solving the Problems

The present disclosure relates to a method for producing a resin composition molded body, including preparing a plastic waste which includes at least one of a waste plastic residue derived from general waste, waste plastic derived from industrial waste or waste plastic derived from marine plastic waste and which includes a low melting point resin with a melting point in a range of 80°C or higher and lower than 190°C and a non-low melting point resin including at least one of a high melting point resin with a melting point of 190°C or higher or a thermosetting resin, carrying out a magnetic substance removing treatment and a water washing treatment on the plastic waste or crushed material obtained by crushing the plastic waste, pulverizing the plastic waste or the crushed material after the water washing treatment to obtain a resin composition powder, and molding the resin composition powder to obtain a resin composition molded body.

BRIEF DESCRIPTION OF THE DRAWINGS

Fig. 1 is a block diagram of a system for producing a resin composition molded body which can be used in a method for producing a resin composition molded body according to one embodiment of the present disclosure;
Fig. 2 is a flow diagram of a method for producing a resin composition powder for production of a resin composition molded body according to one embodiment of the present disclosure; and
Fig. 3 is a flow diagram of a method for producing a resin composition molded body according to one embodiment of the present disclosure.

PREFERRED MODE FOR CARRYING OUT THE INVENTION

The embodiment of the present disclosure will now be described in detail with reference to the drawings. It should be noted that using a wood resin composition molded body including wood powder as an example of a resin composition molded body, the method for producing it will be described in the present embodiment below.

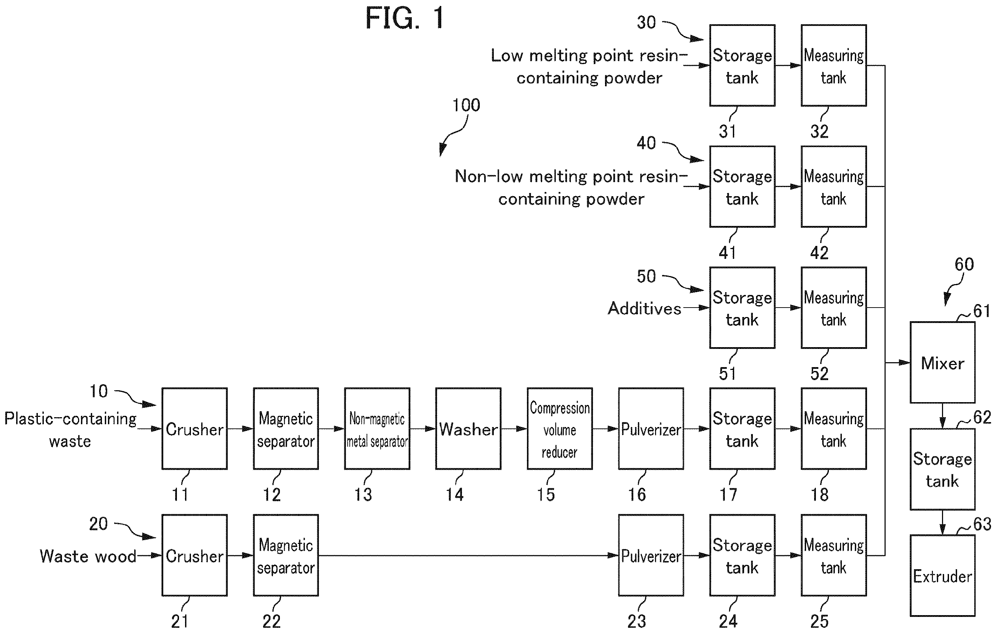

Fig. 1 is a block diagram of a system for producing a resin composition molded body which can be used in a method for producing a resin composition molded body according to one embodiment of the present disclosure. As shown in Fig. 1, a resin composition molded body producing system 100 includes a resin composition powder feeding unit 10, a wood powder feeding unit 20, a low melting point resin powder feeding unit 30, a non-low melting point resin powder feeding unit 40, an additive feeding unit 50 and a molded body producing unit 60.

The resin composition powder feeding unit 10 produces a resin composition powder for producing a resin composition molded body from plastic waste and stores the powder. The resin composition powder feeding unit 10 has a plastic waste crusher 11, a magnetic separator 12, a non-magnetic metal separator 13, a washer 14, a compression volume reducer 15, a pulverizer 16, a storage tank 17 and a measuring tank 18.

The plastic waste includes a low melting point resin with a melting point in a range of 80°C or higher and lower than 190°C, and a non-low melting point resin which is one of a high melting point resin with a melting point of 190°C or higher and a thermosetting resin or a mixture of both. The plastic waste may include a substance other than synthetic resin. The substance other than synthetic resin may be an inorganic substance or an organic substance. Examples of the inorganic substance include magnetic substance, non-magnetic metals, glass, pebbles, metal, shellfish and sand, as well as drying materials such as silica gel and an iron-based oxygen scavenger. Examples of the magnetic substance can include iron, cobalt and nickel. Examples of the non-magnetic metal can include aluminum. Examples of the organic substance are oil and fat, food residues and surfactants.

Examples of the low melting point resin can include polystyrene (PS), acrylonitrile-butadiene-styrene resin (ABS), polyethylene (PE), polymethyl methacrylate (PMMA), polycarbonate (PC), polypropylene (PP), polyamide 12 (PA12) and polyacetal (POM). The melting point of the high melting point resin may be 340°C or lower. Examples of the high melting point resin can include polyethylene terephthalate (PET), polyamide 6 (PA6), polybutylene terephthalate (PBT), polyphenylene sulfide (PPS) and polyether ether ketone (PEEK). The thermosetting resin means a resin after curing. Examples of the thermosetting resin can include polyimide (PI), polyurethane (PU) and phenol formaldehyde resin (PF). The low melting point resin and non-low melting point resin may be each contained individually or two or more of each of the resins may be contained in the plastic waste.

The plastic waste is any one of wastes including a waste plastic residue derived from general waste, waste plastic derived from industrial waste and waste plastic derived from marine plastic waste or a mixture of two or more of them. Plastic means a molded product of synthetic resin. The plastic waste, for example, is a waste including 50 mass% or more of waste plastic. The amount of the waste plastic in the plastic waste may be, for example, in a range of 50 mass% or more and 100 mass% or less, a range of 50 mass% or more and 99.5 mass% or less or a range of 50 mass% or more and 70 mass% or less.

The ignition residue of the plastic waste may be in a range of 0.5 mass% or more and 10 mass% or less. The ignition residue is a value measured, for example, by a method below.

(Method for measuring ignition residue)

The weight of a sample before heating is measured with the sample put in a crucible. It is retained using a high temperature electric furnace at 600°C after 2 hours to completely burn organic components including synthetic resin. After allowing it to cool, the ignition residue is obtained as a percentage by dividing the weight of the remaining sample by the weight before heating.

General waste is a waste except for industrial waste and marine plastic waste and includes domestic waste discarded by general households. Examples of the waste plastic derived from general waste can include plastics used as product containers and packaging materials. Waste plastic residues are residues after separating and recovering some of resins contained in the waste plastic derived from general waste and are, for example, residues after separating and recovering some of the low melting point resin. The low melting point resin separated and recovered includes, for example, at least any one of PP, PE and PS and may include PP and PE. The waste plastic residue may be a residue after separating and recovering 5 mass% or more, 5 mass% or more and 95 mass% or less, 5 mass% or more and 50 mass% or less or 5 mass% or more and 15 mass% or less of the low melting point resin contained in the waste plastic. It should be noted that the proportion of the sum of PP and PE among the separated and recovered low melting point resins may be 20 mass% or more, in a range of 50 mass% or more and 100 mass% or less or a range of 70 mass% or more and 100 mass% or less.

Waste plastic derived from industrial waste is a waste plastic generated with business activities. Examples of the waste plastic derived from industrial waste can include nonconforming products and surplus products. Waste plastic derived from marine plastic waste is a waste plastic accumulated in the ocean due to plastic products directly being discarded in the sea or plastic products discarded on land drifting to the sea via rivers and lakes. The plastic products are, for example, vinyl pieces, plastic bottles and fishing tools. The waste plastic derived from marine plastic waste includes, for example, microplastics in which the size of plastic products is reduced to 5 mm or less by deterioration due to influence of waves and UV rays.

The amounts of the low melting point resin and the non-low melting point resin in synthetic resin contained in the plastic waste are not particularly restricted. The amount of the low melting point resin may be, for example, in a range of 3 mass% or more and 95 mass% or less. The amount of the non-low melting point resin may be, for example, in a range of 5 mass% or more and 97 mass% or less. The ratio of the amounts of the low melting point resin to the non-low melting point resin (the ratio of the amounts of the low melting point resin/the non-low melting point resin) may be, for example, in a range of 1/3 or more and 5.00 or less in mass ratio. The amount of the low melting point resin may be 80 mass% or less or 70 mass% or less. The amount of the low melting point resin may be in any range of 5 mass% or more and 80 mass% or less, 25 mass% or more and 80 mass% or less, 25 mass% or more and 75 mass% or less and 30 mass% or more and 70 mass% or less. The amount of the non-low melting point resin may be 20 mass% or more or 30 mass% or more. The amount of the low melting point resin may be in any range of 20 mass% or more and 95 mass% or less, 20 mass% or more and 75 mass% or less, 25 mass% or more and 75 mass% or less and 30 mass% or more and 70 mass% or less. The ratio of the amounts of the low melting point resin/the non-low melting point resin may be less than 4.00 or in a range of 1/3 or more and 3.00 or less in mass ratio.

When the plastic waste is a waste plastic residue, the amount of the low melting point resin in synthetic resin contained in the waste plastic residue may be, for example, 95 mass% or less, for example in a range of 25 mass% or more and 95 mass% or less or a range of 35 mass% or more and 90 mass% or less. The total amount of PE, PP and PS in synthetic resin contained in the waste plastic residue may be 80 mass% or less or 70 mass% or less. The total amount of PE, PP and PS may be in any range of 5 mass% or more and 80 mass% or less, 25 mass% or more and 80 mass% or less, 25 mass% or more and 75 mass% or less and 30 mass% or more and 70 mass% or less. The total amount of PE and PP to the whole amount of the low melting point resin may be 90 mass% or less or in a range of 20 mass% or more and 80 mass% or less. The amount of the non-low melting point resin in the above-described synthetic resin may be, for example, 5 mass% or more, in a range of 5 mass% or more and 75 mass% or less or a range of 10 mass% or more and 65 mass% or less. The ratio of the amounts of the low melting point resin to the non-low melting point resin in the above-described synthetic resin (the ratio of the amounts of the low melting point resin/the non-low melting point resin) may be, for example, in a range of 1/3 or more and 5.00 or less or a range of 0.71 or more and 3.00 or less in mass ratio. The ratio of the amounts of the low melting point resin/the non-low melting point resin may be less than 4.00 or in a range of 1/3 or more and 3.00 or less in mass ratio. The ratio of the amounts of the thermosetting resin to the high melting point resin contained in the non-low melting point resin in the above-described synthetic resin (thermosetting resin/high melting point resin) may be, for example, in a range of 0.01 or more and 100 or less or a range of 0.05 or more and 50 or less in mass ratio. The amount of the thermosetting resin in the above-described synthetic resin may be, for example, 0 mass% or more or in a range of 1 mass% or more and 10 mass% or less. The amount of the high melting point resin in the above-described synthetic resin may be, for example, 5 mass% or more or in a range of 10 mass% or more and 90 mass% or less.

The form of the plastic waste is not particularly restricted and may be, for example, a veil or mass shape. When production units (lot) for the resin composition molded body are separated depending on the type of plastic waste, the plastic waste used in each production unit may be different in generation sites and generation times. In the plastic waste used in each production unit, for example, the standard deviation of the amount of the low melting point resin may be 2 mass% or more or in a range of 2 mass% or more and 23 mass% or less.

The crusher 11 is a device for crushing the plastic waste to obtain plastic pieces. As the crusher 11, for example, a uniaxial crusher can be used. The size of the plastic pieces obtained by the crusher 11 is not particularly restricted and may be, for example, a size which passes through a sieve with an aperture size of 20 to 50 mm. The aperture size of the sieve may be 50 mm, 40 mm or 30 mm.

The magnetic separator 12 is a device for removing and recovering magnetic substances contained in the plastic pieces. As the magnetic separator 12, for example, a hanging type magnetic separator, a pulley type magnetic separator, a drum type magnetic separator and a roll type magnetic separator can be used. Examples of the magnetic substances can include iron, stainless steel and ferrite. The magnetic separator 12 may be used individually or two or more of the magnetic separators may be used in combination.

The non-magnetic metal separator 13 is a device for removing and recovering non-magnetic metal contained in the plastic pieces. Examples of the non-magnetic metal can include aluminum, copper, zinc and brass. As the non-magnetic metal separator 13, an eddy current separator can be used.

The washer 14 is a device for washing and removing attached material such as detergents, food stains and oil stains attached to the plastic pieces. As the washer 14, a wet pulverizer washer having a pulverizing function can be used. The wet pulverizer washer may pulverize plastic pieces in water. As the function of pulverizing plastic pieces, a pulverizer which has stationary blades and rotary blades and pulverizes plastic pieces with the pieces put between the stationary blades and the rotary blades can be used. Materials attached to coarse plastic particles can be more efficiently removed by pulverizing the plastic pieces using the wet pulverizer washer to obtain coarse plastic particles and simultaneously washing them.

The compression volume reducer 15 is a device for compressing coarse plastic particles to remove moisture attached to coarse plastic particles and simultaneously to reduce the volume to obtain a coarse plastic powder. As the compression volume reducer 15, a screw type compression volume reducer having a screw in a barrel with a drain hole can be used. By using the screw type compression volume reducer, moisture is removed by frictional heat among the screw, the barrel and the coarse plastic particles, and also some of the low melting point resin in the coarse plastic particles is melted and the coarse plastic particles are fused with each other to reduce the volume of coarse plastic particles.

The pulverizer 16 is a device for pulverizing the coarse plastic powder to generate a fine resin composition powder. As the pulverizer 16, a fine pulverizer (cutter mill), a hammer mill and a pin mill can be used. The fine pulverizer (cutter mill) is a device which has stationary blades and rotary blades and pulverizes the plastic pieces with the pieces put between the stationary blades and the rotary blades. The pulverizer 16 may be used individually or two or more of the pulverizers may be used in combination.

A sieve may be placed at the outlet of the pulverizer 16 for the resin composition powder. The pulverizer 16 may be formed for example so that the coarse plastic powder with a coarse size remains inside the pulverizer 16 and only a fine resin composition powder passing through the sieve is ejected to the outside. As the sieve, for example, a sieve with an aperture size of 1 to 3 mm can be used. The aperture size of the sieve may be 3 mm, 2 mm or 1 mm. When the aperture size of the sieve is, for example, 500 $\mu$m or less, there is a risk that the pulverized low melting point resin may be melted by heat generated by pulverizing the coarse plastic powder and the molten resin may be solidified on the surface of the sieve and thus sieve clogging may be likely to occur.

The storage tank 17 is a tank to temporarily store the resin composition powder generated by the pulverizer 16. In addition, the measuring tank 18 is a tank to measure the resin composition powder fed from the storage tank 17 and temporarily store a predetermined amount of the resin composition powder.

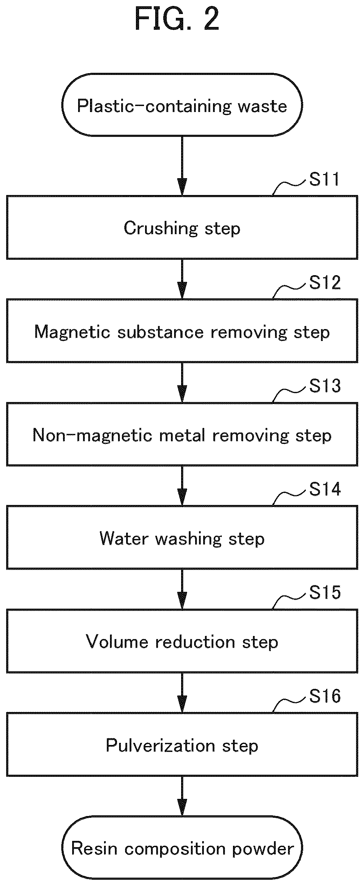

The resin composition powder feeding unit 10 can produce the resin composition powder from the plastic waste, for example, as follows. Fig. 2 is a flow diagram of a method for producing a resin composition powder for production of a resin composition molded body according to one embodiment of the present disclosure.

The method for producing a resin composition powder of the present embodiment includes a crushing step S11, a magnetic substance removing step S12, a non-magnetic metal removing step S13, a water washing step S14, a volume reduction step S15 and a pulverization step S16.

The crushing step S11 is crushing the plastic waste to obtain plastic pieces. The crushing step S11 is carried out using the crusher 11.

The magnetic substance removing step S12 is removing and recovering magnetic substances contained in the plastic pieces. The magnetic substance removing step S12 is carried out using the magnetic separator 12. By the magnetic substance removing step S12, magnetic substances contaminating the plastic pieces can be certainly removed. By removing the magnetic substances, an adverse effect can be prevented, in which the magnetic substances remain inside the pulverizer and cause wear and defects of blades inside the pulverizer to gradually reduce pulverization efficiency of the pulverizer in the pulverization step S16. By carrying out the magnetic substance removing step S12 after crushing the plastic waste into plastic pieces in the crushing step S11, molded bodies such as push pumps used in hand soap and shampoo containers are also crushed, and thus metal magnetic substances such as spring materials and screw materials used in the molded bodies can be more certainly removed.

The non-magnetic metal removing step S13 is removing and recovering non-magnetic metal contained in the plastic pieces. The non-magnetic metal removing step S13 is carried out using the non-magnetic metal separator 13.

The water washing step S14 is washing and removing materials attached to the plastic pieces by washing the materials attached to the plastic pieces (particularly organic substances) with water. In the water washing step S14, the plastic pieces are pulverized into coarse plastic particles and simultaneously the materials attached to the coarse plastic particles may be washed and removed. The water washing step S14 is carried out using the washer 14. By the water washing step S14, an adverse effect can be prevented, in which organic substances such as detergents, food stains and oil stains are melted and attach to blades inside the pulverizer to reduce pulverization efficiency and organic substances are melted and attach to the sieve of the pulverizer to cause sieve clogging in the pulverization step S16. In the resin composition powder obtained, the amount of contaminating organic substances is reduced and thus microorganisms are not easily proliferated.

The volume reduction step S15 is removing moisture attached to the coarse plastic particles and also reducing the volume to obtain the coarse plastic powder. The volume reduction step S15 is carried out using the compression volume reducer 15.

The pulverization step S16 is pulverizing the coarse plastic powder to obtain the resin composition powder. In the method for producing a resin composition powder of the present embodiment, the low melting point resin and the non-low melting point resin contained in the plastic waste are not separated and are pulverized at the same time in the pulverization step S16. The pulverization step S16 is carried out using the pulverizer 16. The resin composition powder obtained by pulverization is fed to the storage tank 17.

In the case of a veil or mass-shaped plastic waste, the veil or mass-shaped plastic waste may be disintegrated using a disintegrator before the crushing step S11. In addition, the plastic waste can be contaminated with a variety of rough magnetic wastes such as batteries, cigarette lighters, spray cans, razors and needles. Therefore, the rough magnetic wastes may be removed and recovered using a magnetic separator before the crushing step S11.

The wood powder feeding unit 20 produces a wood powder used as a raw material for the resin composition molded body from waste wood and stores the powder. The wood powder feeding unit 20 has a crusher 21, a magnetic separator 22, a pulverizer 23, a storage tank 24 and a measuring tank 25.

As waste wood, for example, waste construction wood, thinned wood and sawdust can be used.

The crusher 21 is a device for crushing waste wood to obtain wood chips. As the crusher 21, for example, a uniaxial pulverizer can be used. The size of wood chips obtained by the crusher 21 is not particularly restricted and may be, for example, a size which passes through a sieve with an aperture size of 20 to 50 mm. The aperture size of the sieve may be 50 mm, 40 mm or 30 mm.

The magnetic separator 22 is a device for removing and recovering magnetic substances contained in the wood chips. As the magnetic separator 22, for example, a hanging type magnetic separator, a pulley type magnetic separator, a drum type magnetic separator and a roll type magnetic separator can be used. Examples of the magnetic substances can include nails and bolts. The magnetic separator 12 may be used individually or two or more of the magnetic separators may be used in combination.

The pulverizer 23 is a device for pulverizing the wood chips to generate a fine wood powder. As the pulverizer 23, a fine pulverizer (cutter mill), a hammer mill and a pin mill can be used. The pulverizer 23 may be used individually or two or more of the pulverizers may be used in combination.

A sieve may be placed at the outlet of the pulverizer 23 for the wood powder. The pulverizer 16 may be formed for example so that the coarse plastic powder with a coarse size remains inside the pulverizer 16 and only a fine resin composition powder passing through the sieve is ejected to the outside. As the sieve, a sieve with an aperture size of 300 $\mu$m to 3 mm, for example, can be used. The aperture size of the sieve may be 2 mm, 1 mm or 500 $\mu$m.

The particle size of the wood powder is not particularly limited and the percentage of particles with a longer diameter of 3.0 mm or more may be 35% by number or less or 20% by number or less of particles with a longer diameter of 1.0 mm or more. In addition, the percentage of particles with a longer diameter of less than 2.0 mm may be 30% by number or more or 50% by number or less. The percentage of these particles can be found by observing the cross-section of a resin composition molded body using an optical microscope and measuring the particle diameter of the wood powder.

The storage tank 24 is a tank to temporarily store the wood powder generated in the pulverizer 23. In addition, the measuring tank 25 is a tank to measure the wood powder fed from the storage tank 24 and temporarily store a predetermined amount of the wood powder.

The low melting point resin powder feeding unit 30 stores a low melting point resin powder used as a raw material for the resin composition molded body as needed. The low melting point resin powder feeding unit 30 has a storage tank 31 and a measuring tank 32.

The low melting point resin powder includes a low melting point resin. Examples of the low melting point resin are PS, ABS, PE, PMMA, PC, PP, PA12 and POM. The low melting point resin may be used individually or two or more of them may be used in combination. The low melting point resin powder may include a non-low melting point resin. The amount of the low melting point resin in the low melting point resin powder may be, for example, 60 mass% or more or 80 mass% or more. The low melting point resin powder may be a powder obtained by pulverizing plastic waste including 60 mass% or more of the low melting point resin. The low melting point resin powder may be a powder which passes through a sieve with an aperture size of 3 mm. As the low melting point resin powder, for example, a powder obtained by pulverizing waste such as shrink films (PE), cable ties (PP) and foamed polystyrene (PS) after used for product packaging, binding and curing into 3 mm or less can be used. In addition, a powder obtained by pulverizing recycled plastics (PP, PE and PS) recovered and produced based on the Containers and Packaging Recycling Law into 3 mm or less can be also used.

The storage tank 31 is a tank to temporarily store the low melting point resin powder. In addition, the measuring tank 32 is a tank to measure the low melting point resin powder fed from the storage tank 31 and temporarily store a predetermined amount of the low melting point resin powder.

The non-low melting point resin powder feeding unit 40 stores a non-low melting point resin powder used as a raw material for the resin composition molded body as needed. The non-low melting point resin powder feeding unit 40 has a storage tank 41 and a measuring tank 42.

The non-low melting point resin powder includes a non-low melting point resin. Examples of the non-low melting point resin are PET, PA6, PBT, PPS, PEEK, PI, PU and PF. The non-low melting point resin may be used individually or two or more of them may be used in combination. The non-low melting point resin powder may include a non-low melting point resin. The amount of the non-low melting point resin in the non-low melting point resin powder may be, for example, 60 mass% or more or 80 mass% or more. The non-low melting point resin powder may be a powder obtained by pulverizing plastic waste including 60 mass% or more of the non-low melting point resin. The non-low melting point resin powder may be a powder which passes through a sieve with an aperture size of 3 mm. As the non-low melting point resin powder, for example, a recycled raw material such as a powder obtained by pulverizing waste such as PET used as containers for egg sales and food packaging material into 3 mm or less can be used.

The storage tank 41 is a tank to temporarily store the non-low melting point resin powder. In addition, the measuring tank 42 is a tank to measure the non-low melting point resin powder fed from the storage tank 41 and temporarily store a predetermined amount of the non-low melting point resin powder.

The additive feeding unit 50 stores additives optionally added to the resin composition molded body. The additive feeding unit 50 has a storage tank 51 and a measuring tank 52.

As the additives, for example, various additives which have been applied to conventional resin composition molded bodies such as pigments, compatibilizing agents to improve affinity between a resin and a wood powder, fillers, lubricants, weathering agents, heat stabilizers, foaming agents and antistatic agents can be used. The pigment is used to color the resin composition molded body. As the pigment, an inorganic-based pigment, an organic-based pigment and a mixture thereof can be used. The compatibilizing agent is used to increase adhesion between the wood powder and resin components to improve strength properties and water resistance of the resin composition molded body. As the compatibilizing agent, a maleic anhydride-modified polypropylene-based compatibilizing agent can be used. The lubricant is added to improve slipperiness with a mold. As the lubricant, oxidized polyolefin wax, acid-modified polyolefin wax, calcium stearate and zinc stearate can be used. As the weathering material, an ultraviolet absorber (UVA), a light absorber (HALS) and an antioxidant can be used.

The storage tank 51 is a tank to temporarily store additives. In addition, the measuring tank 52 is a tank to measure additives fed from the storage tank 51 and temporarily store a predetermined amount of additives. The storage tank 51 and the measuring tank 52 may be placed one for each additive or one for a mixture of additives obtained by mixing two or more additives.

The molded body producing unit 60 produces the resin composition molded body. The molded body producing unit 60 has a mixer 61, a storage tank 62 and an extruder 63.

The mixer 61 is a device for obtaining a raw material mixture by mixing the resin composition powder, at least one of a low melting point resin-containing powder or a non-low melting point resin-containing powder, the wood powder and additives, which are the raw materials for the resin composition molded body. As the mixer 61, for example, a heater mixer can be used. A mixture in which raw materials are uniformly dispersed can be obtained by mixing the above raw materials while heating using a heater mixer. The heating temperature of the heater mixer varies depending on resins contained in the raw material mixture and may be, for example, in a range of 100 to 150°C when the resin having the lowest melting point is PE.

The storage tank 62 is a tank to temporarily store the raw material mixture. The storage tank 62 feeds a predetermined amount of the raw material mixture into the extruder 63.

The extruder 63 is a device for molding the raw material mixture into a predetermined shape. As the extruder 63, for example, a single screw extruder and a twin screw extruder can be used. The molding temperature of the extruder 63 varies depending on factors such as the type and amount of the low melting point resin contained in the raw material mixture and is, for example, 150°C or higher when PE is contained. Meanwhile, the wood powder can be decomposed at 190°C or higher and gasified to generate voids in the resin composition molded body, and therefore the molding temperature is preferably lower than 190°C.

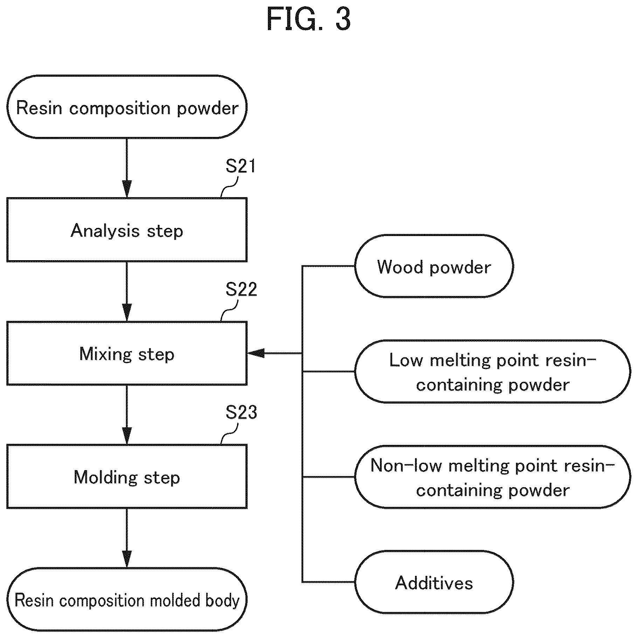

The method for producing a resin composition molded body using the resin composition molded body producing system 100 will now be described. Fig. 3 is a flow diagram of a method for producing a resin composition molded body according to one embodiment of the present disclosure. The method for producing a resin composition molded body of the present embodiment includes an analysis step S21, a mixing step S22 and a molding step S23.

The analysis step S21 is analyzing the composition of the resin composition powder. As the composition of the resin composition powder, the ratio of the amount of the low melting point resin to the amount of the non-low melting point resin in the resin composition powder can be used. The resin composition powder (sample powder), for analysis may be, for example, the resin composition powder stored in the storage tank 17 in the resin composition powder feeding unit 10.

For the analysis of the amount of the low melting point resin and the amount of the non-low melting point resin in the resin composition powder, for example, a method can be used, including separating the low melting point resin and the non-low melting point resin using differences in specific gravity between the resins and measuring the amount of each of the separated resins. In the present embodiment, an analysis was carried out as follows. The resin composition powder is soaked as the sample powder in an aqueous solution of sodium chloride. Next, the amount of floating material at the surface of the aqueous solution of sodium chloride and the amount of sediment are measured. The floating material is skimmed from the aqueous solution of sodium chloride. The sediment is recovered by filtering the aqueous solution of sodium chloride after skimming the whole amount of the floating material. The recovered floating material and sediment are washed with water and then dried, and the amounts of the floating material and sediment are measured. Then, the amount of the floating material is used as the amount of the low melting point resin, and the amount of the sediment is used as the amount of the non-low melting point resin. The specific gravity of the aqueous solution of sodium chloride can be, for example, 1.08 to 1.13.

The mixing step S22 is mixing the resin composition powder, at least one of the low melting point resin-containing powder or the non-low melting point resin-containing powder, the wood powder and additives to obtain a raw material mixture. The mixing step S22 is carried out by mixing raw materials fed from the measuring tanks 18, 25, 32, 42 and 52 using the mixer 61. The obtained raw material mixture is fed to the storage tank 62.

In the mixing step S22, the mixing ratio of the resin composition powder and the low melting point resin-containing powder and/or the non-low melting point resin-containing powder is adjusted based on the ratio of the amount of the low melting point resin to the amount of the non-low melting point resin in the resin composition powder obtained in the analysis step S21. The total amount of the low melting point resin and the non-low melting point resin in the raw material mixture obtained in the mixing step S22 may be, for example, in a range of 50 to 90 mass%. The amount of the wood powder may be, for example, in a range of 5 to 40 mass%. The amount of additives may be, for example, in a range of 5 to 40 mass%. The ratio of the amount of the wood powder to the amount of the low melting point resin (the ratio of the amounts of the wood powder/the low melting point resin) may be 5.0 or less. In addition, the ratio of the amount of the low melting point resin to the amount of the non-low melting point resin in the resin composition powder mixture may be in a range of 1/3-5 or a range of 1/3-1.40 in mass ratio.

The molding step S23 is molding the raw material mixture obtained in the mixing step S22 to obtain a wood resin composition molded body. The molding step S23 is carried out by extrusion molding of the raw material mixture fed from the storage tank 62 using the extruder 63. The low melting point resin in the resin composition powder is melted by extrusion molding, and thus a wood resin composition molded body in which the non-low melting point resin and the wood powder are dispersed in the low melting point resin can be obtained. The shape of the wood resin composition molded body is not particularly restricted and may be, for example, a plate-shaped formed body.

In the molding step S23, the molding temperature of the raw material mixture is preferably lower than (the melting point of the non-low melting point resin -10°C) contained in the raw material mixture. When the melting point of the non-low melting point resin is 250°C, for example, the molding temperature is preferably lower than 240°C. When the non-low melting point resin is not melted and remains in an unmelted state in the wood resin composition molded body, the non-low melting point resin is dispersed in the form of islands in the molded body and behaves like a filler. Because the non-low melting point resin has a higher elastic modulus than the low melting point resin, the non-low melting point resin can reinforce the low melting point resin in the form of sea having a lower elastic modulus by dispersion in the form of islands. Because of this, high elasticity and high strength are obtained as the whole resin composition molded body. In addition, when the molding temperature is 200°C or higher in a system having a wood powder added thereto, the wood powder can be carbonized and thus molding is desirably carried out at 190°C or lower. The molding temperature of the raw material mixture is preferably not lower than a temperature at which 5 to 10°C is added to the melting point of the low melting point resin. The molding temperature of the raw material mixture may be, for example, in a range of 160°C or higher and 190°C or lower. It should be noted that the melting point of the non-low melting point resin means the lowest temperature of the melting points of a plurality of non-low melting point resins contained in the raw material mixture. The melting point of the low melting point resin indicates the highest temperature of the melting points of a plurality of low melting point resins contained in the raw material mixture.

From the viewpoint of improving the elasticity and strength of the resin composition molded body, the resin composition powder is preferably a fine powder and more preferably a powder which passes through a sieve with an aperture size of 1 mm.

The wood resin composition molded body obtained as described above includes wood powder and has a texture close to that of wood and thus can be used as a replacement for wood. The resin composition formed body can be used as, for example, construction materials, building materials and gardening materials. Examples of the construction materials include paving materials. Examples of the building materials can include floor materials, particularly bathroom floor materials, roof materials, wall materials, handrails, sashes, wood decks, fences and the like. Examples of the gardening materials can include flower beds.

In the method for producing a resin composition molded body of the present embodiment having the structure as described above, the plastic waste including the low melting point resin and the non-low melting point resin is crushed in the crushing step S11 to obtain crushed material, and the obtained crushed material is subjected to the magnetic substance removing step S12, the non-magnetic metal removing step S13 and the water washing step S14 and then the pulverization step S16, and thus inorganic substances and organic substances such as oil and fat, food residues and surfactants contaminating the plastic waste can be efficiently removed. Therefore, according to the method for producing a resin composition molded body of the present embodiment, a resin composition molded body can be industrially and stably produced using the plastic waste including the low melting point resin and the non-low melting point resin.

In the method for producing a resin composition molded body of the present embodiment, the resin composition powder derived from plastic waste can be industrially and more advantageously produced using a fine pulverizer (cutter mill) as the pulverizer 16 in the pulverization step S16. In addition, in the method for producing a resin composition molded body of the present embodiment, when the resin composition powder derived from plastic waste is a powder which is allowed to pass through a sieve with an aperture size of 3 mm, the non-low melting point resin is fine, and thus the non-low melting point resin can be coated with molten material of the low melting point resin during the production of the resin composition molded body. Therefore, the water resistance of the resin composition molded body obtained is further improved. Furthermore, in the method for producing a resin composition molded body of the present embodiment, moisture is removed using the compression volume reducer 15 in the volume reduction step S15 after the water washing step S14 and also the coarse plastic particles are fused to each other to reduce the volume, and therefore the pulverization efficiency of the pulverization step S16 is improved.

In the method for producing a resin composition molded body of the present embodiment, when using a waste plastic residue derived from general waste as the plastic waste, the composition of resins in the waste plastic residue is likely to vary. Therefore, when using the resin composition powder derived from a waste plastic residue, at least one of the low melting point resin-containing powder or the non-low melting point resin-containing powder prepared in advance is added thereto and the obtained mixture is mixed to obtain a resin composition powder mixture, and the resin composition powder mixture may be molded. By doing this, the amounts of the low melting point resin and the non-low melting point resin in the resin composition powder mixture can be adjusted, and thus the resin composition molded body can be stably produced.

In the method for producing a resin composition molded body of the present embodiment, when the low melting point resin-containing powder added to the resin composition powder derived from plastic waste contains 60 mass% or more of the low melting point resin, because the amount of the low melting point resin in the low melting point resin-containing powder is high, the amount of the low melting point resin-containing powder added is easily adjusted when the amount of the low melting point resin in the resin composition powder is small. In addition, in the method for producing a resin composition molded body of the present embodiment, when the non-low melting point resin-containing powder added to the resin composition powder derived from plastic waste contains 60 mass% or more of the non-low melting point resin, because the amount of the non-low melting point resin in the non-low melting point resin-containing powder is high, the amount of the non-low melting point resin-containing powder added is easily adjusted when the amount of the non-low melting point resin in the resin composition powder is small.

In the method for producing a resin composition molded body of the present embodiment, a resin composition molded body having a texture close to that of wood can be obtained by adding wood powder to the resin composition powder derived from plastic waste and mixing the obtained mixture to obtain a wood powder-containing resin composition powder mixture and molding the wood powder-containing resin composition powder mixture. A cellulose-based material powder such as pulp powder can be used in place of the wood powder. It should be noted that the particle size of the wood powder correlates with the water resistance of the resin composition molded body obtained, and as the particle size of the wood powder is reduced, the water resistance of the resin composition molded body increases. From the viewpoint of improving the water resistance of the resin composition molded body, the wood powder is preferably a powder which passes through a sieve with an aperture size of 300 $\mu$m to 3 mm and more preferably a powder which passes through a sieve with an aperture size of 500 $\mu$m.

In the method for producing a resin composition powder for production of a resin composition molded body of the present embodiment, the plastic waste is crushed to obtain crushed material in the crushing step S11, and the obtained crushed material is subjected to the magnetic substance removing step S12, the non-magnetic metal removing step S13 and the water washing step S14 and then pulverized, and thus inorganic substances and organic substances such as oil and fat, food residues and surfactants contaminating the plastic waste can be efficiently removed. Because of this, according to the method for producing a resin composition powder of the present embodiment, a resin composition powder which can be used for production of a resin composition molded body can be industrially and stably produced using a waste plastic residue derived from general waste or waste plastic derived from industrial waste.

The embodiment of the present disclosure has been described above. However, the present disclosure is not limited thereto. In the present embodiment, for example, the plastic waste is crushed in the crushing step S11; however, the crushing step S11 may be omitted depending on the shape of the plastic waste. In the present embodiment, non-magnetic metal contained in the plastic pieces is removed and recovered in the non-magnetic metal removing step S13; however, for example when the amount of non-magnetic metal contained in the plastic pieces is small, the non-magnetic metal removing step S13 may be omitted. In the method for producing a resin composition powder of the present embodiment, the volume of coarse plastic particles after being washed in the water washing step S14 is reduced in the volume reduction step S15; however, coarse plastic particles after being washed may be pulverized without volume reduction in the pulverization step S16.

In the present embodiment, the amounts of the low melting point resin and the non-low melting point resin in the resin composition powder derived from the plastic waste are measured in the analysis step S21; however, the analysis step S21 is not essential. When the amounts of the low melting point resin and the non-low melting point resin in the plastic waste are revealed, for example, the analysis step S21 may be omitted. In the present embodiment, the amounts of the low melting point resin and the non-low melting point resin in the resin composition powder are measured in the analysis step S21; however, only the amount of the low melting point resin is measured and the amount obtained by subtracting the amount of the low melting point resin from the amount of the resin composition powder may be used as the amount of the non-low melting point resin, or only the amount of the non-low melting point resin is measured and the amount obtained by subtracting the amount of the non-low melting point resin from the amount of the resin composition powder may be used as the amount of the low melting point resin. In the present embodiment, furthermore, the amounts of the low melting point resin and the non-low melting point resin in the resin composition powder are measured using differences in specific gravity in the analysis step S21; however, the measurement method is not limited thereto. DSC (differential scanning calorimeter), GC-MS (gas chromatography-mass spectrometer), infrared absorption spectroscopy and elemental analysis (CHN corder), for example, may be used. When using DSC, the amount of the non-low melting point resin is measured and the amount obtained by subtracting the amount of the non-low melting point resin from the amount of the resin composition powder may be used as the amount of the low melting point resin.

In the present embodiment, the molding step S23 is carried out by extrusion molding; however, the method for molding a resin composition molded body is not limited thereto. The method for molding a resin composition molded body may be a method including melting the low melting point resin in the resin composition powder and forming the resin composition in a molten state. In the method for molding a resin composition molded body, laminate molding using, for example, injection molding, press forming, cast molding or a 3D printer can be used.

In the present embodiment, the coarse plastic powder is pulverized by the pulverizer 16 and wood chips are pulverized by the pulverizer 23; however, a powder mixture including the resin composition powder and the wood powder may be produced by pulverizing the coarse plastic powder and wood chips at the same time using the same pulverizer. The wood resin composition molded body including wood powder has been described as an example of the resin composition molded body; however, it is not necessary to include the wood powder and it is only required to include the resin composition powder derived from plastic waste. In addition, in the present embodiment, waste wood is used as a raw material for the wood powder; however, the raw material for the wood powder is not limited to waste wood.

EXAMPLES

The present disclosure will now be described in more detail based on examples thereof. The present disclosure is not limited to these examples. It should be noted that in the present examples, Waste 1 to 4, general waste and recycled resin having the low melting point resin and the non-low melting point resin in amounts shown in Table 1 below were used as plastic waste. It should be noted that Waste 1 to 4 are waste plastic residues derived from general waste remaining after separating and recovering the low melting point resin from general waste. In Waste 1 to 4, the ratio of the amount of the low melting point resin/the amount of the non-low melting point resin is lower than of general waste. Because of this, material recycling is difficult. In wastes having a ratio of the amount of the low melting point resin/the amount of the non-low melting point resin of less than 1.00, particularly, material recycling is difficult. The recycled resin is a low melting point resin separated and recovered from general waste. The recycled resin has a high ratio of the amount of the low melting point resin/the amount of the non-low melting point resin and has been used for material recycling.

[Table 1]

| Type of plastic waste | Ignition residue* (mass%) | Composition of synthetic resin** | | | Difficulty of material recycling*** |
|---|---|---|---|---|---|
| | | Amount of low melting point resin (mass%) | Amount of non-low melting point resin (mass%) | Ratio of amount of low melting point resin/amount of non-low melting point resin | |
| Waste 1 | 2.1 | 58.3 | 41.7 | 1.40 | B |
| Waste 2 | 1.4 | 25.0 | 75.0 | 0.33 | A |
| Waste 3 | 1.8 | 41.5 | 58.5 | 0.71 | A |
| Waste 4 | 1.3 | 71.7 | 28.3 | 2.53 | B |
| General waste | 1.5 | 86.6 | 13.4 | 6.46 | C |
| Recycled resin | 0.2 | 99.2 | 0.8 | 124 | - |

*Ignition residue is a value when the whole plastic waste is considered 100 mass%;
**The composition of synthetic resin is a value when synthetic resin contained in plastic waste is considered 100 mass%; and
***Difficulty of material recycling was considered A when the ratio of the amount of the low melting point resin/the amount of the non-low melting point resin is less than 1.00, B when the ratio of the amount of the low melting point resin/the amount of the non-low melting point resin is 1.00 or more and less than 4.00 and C when the ratio of the amount of the low melting point resin/the amount of the non-low melting point resin is 4.00 or more.

[Example 1]

(Production of resin composition powder)

Waste 1 was put in a disintegrator and disintegrated. The obtained disintegrated material was subjected to a high-magnetic pulley type magnetic separator with a belt surface magnetic force of 2000 gauss to remove iron-containing material. The disintegrated material after removing the iron-containing material was then crushed by a uniaxial primary crusher until passing through a sieve with an aperture size of 50 mm to obtain plastic pieces (crushing step). Magnetic substances contained in the obtained plastic pieces were removed and recovered using a hanging type magnetic separator and a pulley type magnetic separator (magnetic substance removing step). Next, non-magnetic metal contained in the plastic pieces was removed and recovered using a non-magnetic metal separator (non-magnetic metal removing step). Subsequently, materials attached to the plastic pieces were pulverized until passing through a sieve with an aperture size of 12 mm and simultaneously washed and removed using a wet pulverizer washer to obtain coarse plastic particles (water washing step). Next, the volume of the coarse plastic particles obtained by the wet pulverizer washer was reduced by compression dehydration using a volume reduction compressor dehydrator to obtain a coarse plastic powder with a moisture content of 0.5 mass% (volume reduction step). Finally, the coarse plastic powder was pulverized using a cutter mill type pulverizer until passing through a sieve with an aperture size of 2 mm (pulverization step). As described above, a resin composition powder was obtained. Table 2 below shows implementation of the magnetic substance removing step, the non-magnetic metal removing step, the water washing step and the volume reduction step and the aperture size diameter of sieves used in the pulverization step.

In the pulverization step, the long-term performance stability of the cutter mill type pulverizer was evaluated by a method described below. The results are shown in Table 2 below.

(Long-term performance stability)

The pulverization treatment is continuously carried out for 12 hours and the degree of pulverization performance reduction is evaluated. The raw materials are adjusted and put in the cutter mill type pulverizer so that the spindle motor current value in the pulverizer is a constant value. The weight of the resin composition powder obtained for 30 minutes from 30 minutes to an hour after the start of operation is considered the initial throughput. The weight of the resin composition powder obtained for 30 minutes from 11 hours 30 minutes to 12 hours after the start of operation is measured and the obtained weight is converted into a percentage to the initial throughput, and the obtained value is considered the performance retention rate. A performance retention rate of 90% or more is considered "A", 70% or more and less than 90% is considered "B" and less than 70% is considered "C". It should be noted that blades in the cutter mill type pulverizer are repolished after each Example and each Comparative Example and used for evaluations.

(Production of wood powder)

Waste wood is put in a disintegrator and crushed by a uniaxial primary crusher until passing through a sieve with an aperture size of 50 mm to obtain wood chips (crushing step). Magnetic substances contained in the obtained wood chips were removed and recovered using a hanging type magnetic separator and a pulley type magnetic separator (magnetic substance removing step). Next, the wood chips were pulverized using a cutter mill type pulverizer until passing through a sieve with an aperture size of 1 mm (pulverization step). As described above, a wood powder was obtained. Table 2 below shows the aperture size diameter of sieves used in the pulverization step.

(Method for producing resin composition molded body)

Using a heat mixer, 60 parts by mass of resin composition powder, 30 parts by mass of wood powder and 10 parts by mass of additives (a mixture including a pigment, a compatibilizing agent, an inorganic filler, a lubricant and a weathering material) were mixed at 150°C. The obtained mixture was molded using an extruder with a mold having a rectangular cross sectional shape with a thickness of 30 mm and a width of 300 mm to obtain a plate-shaped resin composition molded body. The composition of the obtained resin composition molded body is shown in Table 3 below.
The flexural strength, water resistance and fungus resistance of the obtained resin composition molded body were evaluated by methods described below. The results are shown in Table 3 below.

(Flexural strength)

The flexural strength (3 point bending) is measured using a full size test specimen in accordance with method B provided in JIS A 5741:2016 (Wood-plastic recycled composite). A flexural strength of 20 MPa or more is considered "S", 15 MPa or more and less than 20 MPa is considered "A", 10 MPa or more and less than 15 MPa is considered "B" and less than 10 MPa is considered "C".

(Water resistance)

A sample was soaked in warm water adjusted at 60°C. The sample is taken out of the warm water daily and the sample thickness is measured. The change rate of the sample thickness to the thickness on the previous day is calculated by the formula (1) described below:

Change rate of sample thickness (%) = (sample thickness - sample thickness on previous day)/sample thickness on previous day $\times$ 100 $\qquad$ (1).

When the change rate of the sample thickness is 0.5% or less, the expansion rate of the sample thickness by water absorption is considered to come to equilibrium, and the equilibrium expansion rate of the sample thickness is calculated using the formula (2) described below. It should be noted that the sample thickness is the average of thicknesses on 5 sites in total: the central part of the plain surface and the vicinities of the 4 corners.

$$\text{Equilibrium expansion rate (\%)} = \{(Tf-Ti)/Ti\} \times 100 \quad (2).$$

In the formula (2), Tf (unit: mm) is the thickness of a resin composition molded body when the change rate of the thickness is 0.5% or less, and Ti (unit: mm) is the thickness of a resin composition molded body before being soaked in warm water. Water resistance is considered "S" when the equilibrium expansion rate is 5% or less, "A" for 10% or less, "B" for above 10% and 20% or less and "C" for above 20%.

(Fungus resistance)

The area of the hypha developed part of a sample after 2 weeks is measured in accordance with method A provided in Annex A (plastic product test) of JIS Z 2911:2018 (Methods of test for fungus resistance). Fungus resistance is considered "A" when the developed area is less than 25%, "B" for 25% or more and less than 50% and "C" for 50% or more.

[Examples 2 to 16, Comparative Examples 1 to 3]

A resin composition powder and a wood powder were produced in the same manner as in Example 1 except that the conditions of producing the resin composition powder and producing the wood powder were changed as shown in Table 2, and a resin composition molded body was produced using the obtained resin composition powder and wood powder. Table 2 shows the long-term performance stability of the pulverizer in the production of the resin composition powder, and Table 3 shows the flexural strength, water resistance and fungus resistance of the obtained resin composition molded bodies.

[Comparative Example 4 and Reference Example 1]

A resin composition powder and a wood powder were produced in the same manner as in Example 1 except that using a plastic waste shown in Table 2 in place of Waste 1, the plastic pieces after the non-magnetic metal removing step were granulated in place of the water washing step and the volume reduction step and the obtained granulated material was then cooled by water spraying (granulation-water spraying step) and the obtained granulated material was pulverized using a cutter mill type pulverizer until passing through a sieve with an aperture size of 2 mm (pulverization step), and a resin composition molded body was produced using the obtained resin composition powder and wood powder.

[Reference Example 2]

A resin composition powder and a wood powder were produced in the same manner as in Example 1 except that using recycled resin in place of Waste 1, pulverization was carried out using a cutter mill type pulverizer until passing through a sieve with an aperture size of 2 mm without carrying out steps from the magnetic substance removing step to the volume reduction step (pulverization step), and a resin composition molded body was produced using the obtained resin composition powder and wood powder.

[Table 2]

| | | Production of resin composition powder | | | | | | | Long-term performance stability of pulverizer |
|---|---|---|---|---|---|---|---|---|---|
| | Type of plastic waste | Magnetic substance removing step | Non-magnetic metal removing step | Water washing step | Volume reduction step | Granulation-water spraying step | Aperture size diameter of sieve used in pulverization step | Long-term performance stability of pulverizer | Aperture size diameter of sieve used in pulverization step |
| Example 1 | Waste 1 | yes | yes | yes | yes | no | 2 mm | A | 1mm |
| Example 2 | Waste 1 | yes | yes | yes | yes | no | 1mm | A | 1mm |
| Example 3 | Waste 2 | yes | yes | yes | yes | no | 2mm | A | 1mm |
| Example 4 | Waste 1 | yes | yes | yes | yes | no | 2mm | A | 500pm |
| Example 5 | Waste 1 | yes | no | yes | yes | no | 2 mm | A | 1mm |
| Example 6 | Waste 1 | yes | yes | yes | yes | no | 3 mm | A | 1mm |
| Example 7 | Waste 1 | yes | yes | yes | yes | no | 4mm | A | 1mm |
| Example 8 | Waste 1 | yes | yes | yes | yes | no | 500pm | C | 1mm |
| Example 9 | Waste 3 | yes | yes | yes | yes | no | 2mm | A | 1mm |
| Example 10 | Waste 4 | yes | yes | yes | yes | no | 2 mm | A | 1mm |
| Example 11 | Waste 4 | yes | yes | yes | yes | no | 1mm | A | 1mm |
| Example 12 | Waste 4 | yes | yes | yes | yes | no | 2mm | A | 500$\mu$m |
| Example 13 | Waste 4 | yes | no | yes | yes | no | 2mm | A | 1mm |
| Example 14 | Waste 4 | yes | yes | yes | yes | no | 3 mm | A | 1mm |
| Example 15 | Waste 4 | yes | yes | yes | yes | no | 4 mm | A | 1mm |
| Example 16 | Waste 4 | yes | yes | yes | yes | no | 500$\mu$m | C | 1mm |
| Comparative Example 1 | Waste 1 | yes | yes | no | no | no | 2mm | B | 1mm |
| Comparative Example 2 | Waste 1 | no | no | yes | yes | no | 2mm | B | 1mm |
| Comparative Example 3 | Waste 1 | no | no | no | no | no | 2mm | C | 1mm |

14

EP 4 670 941 A1

(continued)

| | Production of resin composition powder | | | | | | | | Long-term performance stability of pulverizer |
|---|---|---|---|---|---|---|---|---|---|
| | Type of plastic waste | Magnetic substance removing step | Non-magnetic metal removing step | Water washing step | Volume reduction step | Granulation-water spraying step | Aperture size diameter of sieve used in pulverization step | Long-term performance stability of pulverizer | Aperture size diameter of sieve used in pulverization step |
| Comparative Example 4 | Waste 1 | yes | yes | no | no | yes | 2mm | B | 1mm |
| Reference Example 1 | General waste | yes | yes | no | no | yes | 2mm | C | 1mm |
| Reference Example 2 | Recycled resin | no | no | no | no | no | 2mm | A | 1mm |

[Table 3]

| | Composition of resin composition molded body | | | | | Evaluation results | | |
|---|---|---|---|---|---|---|---|---|
| | Low melting point resin (mass%) | Non-low melting point resin (mass%) | Ratio of amount of low melting point resin/amount of non-low melting point resin | Wood powder (mass%) | Additive s (mass%) | Evaluation of resin composition molded body | | |
| | | | | | | Flexural strength | Water resistance | Fungus resistance |
| Example 1 | 35 | 25 | 1. 40 | 30 | 10 | A | A | A |
| Example 2 | 35 | 25 | 1. 40 | 30 | 10 | S | A | A |
| Example 3 | 15 | 45 | 0.33 | 30 | 10 | A | A | A |
| Example 4 | 35 | 25 | 1. 40 | 30 | 10 | A | S | A |
| Example 5 | 35 | 25 | 1. 40 | 30 | 10 | A | A | A |
| Example 6 | 35 | 25 | 1. 40 | 30 | 10 | B | A | A |
| Example 7 | 35 | 25 | 1. 40 | 30 | 10 | C | A | A |
| Example 8 | 35 | 25 | 1. 40 | 30 | 10 | S | A | A |
| Example 9 | 25 | 35 | 0.71 | 30 | 10 | A | A | A |
| Example 10 | 43 | 17 | 2.53 | 30 | 10 | A | A | A |
| Example 11 | 43 | 17 | 2.53 | 30 | 10 | S | A | A |
| Example 12 | 43 | 17 | 2.53 | 30 | 10 | A | S | A |
| Example 13 | 43 | 17 | 2.53 | 30 | 10 | A | A | A |
| Example 14 | 43 | 17 | 2.53 | 30 | 10 | B | A | A |
| Example 15 | 43 | 17 | 2.53 | 30 | 10 | C | A | A |
| Example 16 | 43 | 17 | 2.53 | 30 | 10 | S | A | A |
| Comparative Example 1 | 35 | 25 | 1. 40 | 30 | 10 | A | A | C |
| Comparative Example 2 | 35 | 25 | 1. 40 | 30 | 10 | A | A | A |
| Comparative Example 3 | 35 | 25 | 1.40 | 30 | 10 | A | A | C |
| Comparative Example 4 | 35 | 25 | 1.40 | 30 | 10 | A | A | C |
| Reference Example 1 | 52 | 8 | 6.5 | 30 | 10 | A | A | C |
| Reference Example 2 | 59.5 | 0.5 | 124 | 30 | 10 | S | S | A |

From the results shown in Table 2 and Table 3, it is found that by using resin composition powders obtained in Examples 1 to 16 in which the magnetic substance removing step, the non-magnetic metal removing step, the water washing step and the volume reduction step were carried out, a resin composition molded body with excellent flexural strength, water resistance and fungus resistance can be obtained. In the resin composition molded bodies obtained in Examples 2 and 11 in which the aperture size of the sieve in the pulverizer used to produce a resin composition powder was 1 mm and Examples 8 and 16 in which the aperture size of the sieve was 500 μm, particularly, flexural strength was improved. This is because by using a resin composition powder which passes through a sieve with an aperture size of 1 mm or 500 μm, a fine non-low melting point resin was dispersed in the form of islands in the resin composition molded body. From the results, it is found that from the viewpoint of the flexural strength of a resin composition molded body, it is preferred that the resin composition powder be a fine powder, that is, the resin composition powder be pulverized into a fine powder.

Meanwhile, it is found that when a resin composition powder is pulverized into a fine powder, the long-term performance stability of the pulverizer tends to be reduced, and the aperture size of the sieve is preferably 1 mm or more when using a cutter mill type pulverizer. In addition, in the resin composition molded bodies obtained in Examples 4 and 12 in which the aperture size of the sieve in the pulverizer used to produce a wood powder is 500 $\mu$m, water resistance was improved. This is because by using a fine wood powder which passes through a sieve with an aperture size of 500 $\mu$m as the wood powder, a water absorption factor in the test of water resistance, the wood powder can be efficiently mixed and dispersed in the low melting point resin and thus water absorption changes in the resin composition molded body can be suppressed. The results in Examples 1 to 16 shows that by carrying out steps of the magnetic substance removing step, the non-magnetic metal removing step, the water washing step and the volume reduction step in accordance with the present disclosure, waste plastic residues which had been conventionally used for thermal recycling could be used for material recycling.

On the contrary, in Comparative Example 1 without carrying out the water washing step and the volume reduction step, the long-term performance stability of the pulverizer was reduced. This is because organic substances such as detergents, food stains and oil stains were not removed and contaminated the pulverizer, the organic substances were melted and attached to the blades inside the pulverizer to reduce pulverization efficiency, and organic substances were melted and attached to the sieve of the pulverizer to clog the sieve. In addition, in the resin composition molded body obtained in Comparative Example 1, water resistance was reduced. This is because organic substances contaminated the resin composition molded body. In Comparative Example 2 without carrying out the magnetic substance removing step and the non-magnetic metal removing step, the long-term performance stability of the pulverizer was reduced. This is because magnetic substances and non-magnetic metal are not removed and contaminate the pulverizer to cause wear of the blades in the pulverizer. In Comparative Example 3 without carrying out steps of the magnetic substance removing step, the non-magnetic metal removing step, the water washing step and the volume reduction step, the long-term performance stability of the pulverizer was largely reduced. This is because organic substances, magnetic substances and non-magnetic metal were not removed and contaminated the pulverizer. In Comparative Example 4 and Reference Example 1 in which the granulation-water spraying step was carried out in place of the water washing step and the volume reduction step, the long-term performance stability of the pulverizer was reduced, and fungus resistance was reduced in the obtained resin composition molded bodies. This is because organic substances contained in the plastic waste could not be removed in the granulation-water spraying step. In Reference Example 2 using recycled resin, meanwhile, the resin composition molded body with excellent flexural strength, water resistance and fungus resistance is obtained even when steps from the magnetic substance removing step to the volume reduction step are not carried out.

The aspects of the present disclosure will be added below.

(Supplementary note 1)

A method for producing a resin composition molded body, including, preparing a plastic waste which includes at least one of a waste plastic residue derived from general waste, waste plastic derived from industrial waste or waste plastic derived from marine plastic waste and which includes a low melting point resin with a melting point in a range of 80°C or higher and lower than 190°C and a non-low melting point resin including at least one of a high melting point resin with a melting point of 190°C or higher or a thermosetting resin, carrying out a magnetic substance removing treatment and a water washing treatment on the plastic waste or crushed material obtained by crushing the plastic waste, pulverizing the plastic waste or the crushed material after the water washing treatment to obtain a resin composition powder, and molding the resin composition powder to obtain a resin composition molded body.

(Supplementary note 2)

The method for producing a resin composition molded body according to supplementary note 1, wherein the ignition residue of the plastic waste is in a range of 0.5 mass% or more and 10 mass% or less.

(Supplementary note 3)

The method for producing a resin composition molded body according to supplementary note 1 or 2, wherein the amount of the low melting point resin in synthetic resin contained in the waste plastic residue derived from general waste and the waste plastic derived from marine plastic waste is 95 mass% or less, and the amount of the non-low melting point resin in the synthetic resin is 5 mass% or more.

(Supplementary note 4)

The method for producing a resin composition molded body according to any one of supplementary notes 1 to 3, wherein the amount of the low melting point resin in synthetic resin contained in the waste plastic residue derived from general waste and the waste plastic derived from marine plastic waste is in a range of 5 mass% or more and 80 mass% or less.

(Supplementary note 5)

The method for producing a resin composition molded body according to any one of supplementary notes 1 to 4, wherein the waste plastic residue derived from general waste is a residue after separating and recovering some of the low melting point resin contained in the waste plastic contained in general waste.

(Supplementary note 6)

The method for producing a resin composition molded body according to supplementary note 5, wherein the waste plastic residue derived from general waste is a residue after separating and recovering 5 mass% or more of the low melting point resin contained in the waste plastic contained in general waste.

(Supplementary note 7)

The method for producing a resin composition molded body according to any one of supplementary notes 1 to 6, wherein the waste plastic residue derived from general waste includes at least any one of polyethylene and polypropylene and the total amount of the polyethylene and the polypropylene to the whole amount of the low melting point resin is 90 mass% or less.

(Supplementary note 8)

The method for producing a resin composition molded body according to any one of supplementary notes 1 to 7, wherein the amount of the high melting point resin in synthetic resin contained in the waste plastic residue derived from general waste is in a range of 10 mass% or more and 90 mass% or less.

(Supplementary note 9)

The method for producing a resin composition molded body according to any one of supplementary notes 1 to 8, wherein the amount of the thermosetting resin in synthetic resin contained in the waste plastic residue derived from general waste is in a range of 0 mass% or more and 20 mass% or less.

(Supplementary note 10)

The method for producing a resin composition molded body according to any one of supplementary notes 1 to 9, wherein the ratio of the amounts of the thermosetting resin to the high melting point resin in the waste plastic residue derived from general waste is in a range of 0.01 or more and 100 or less in mass ratio.

(Supplementary note 11)

The method for producing a resin composition molded body according to any one of supplementary notes 1 to 10, wherein the ratio of the amounts of the low melting point resin to the non-low melting point resin in the waste plastic residue derived from general waste (the ratio of the amounts of the low melting point resin/the non-low melting point resin) is less than 4.00 in mass ratio.

(Supplementary note 12)

The method for producing a resin composition molded body according to any one of supplementary notes 1 to 11, wherein production units for the resin composition molded body are separated depending on types of the plastic waste and the standard deviation of the amount of the low melting point resin in the plastic waste used in each production unit is 2 mass% or more.

(Supplementary note 13)

The method for producing a resin composition molded body according to any one of supplementary notes 1 to 12, wherein the magnetic substance removing treatment is carried out on crushed material obtained by crushing the plastic waste.

(Supplementary note 14)

The method for producing a resin composition molded body according to any one of supplementary notes 1 to 13, wherein a non-magnetic metal removing treatment is carried out between the magnetic substance removing treatment and the water washing treatment.

(Supplementary note 15)

The method for producing a resin composition molded body according to any one of supplementary notes 1 to 14, wherein the crushed material is pulverized using a fine pulverizer.

(Supplementary note 16)

The method for producing a resin composition molded body according to any one of supplementary notes 1 to 15, wherein the crushed material is pulverized under conditions that the resin composition powder pass through a sieve with an aperture size of 3 mm.

(Supplementary note 17)

The method for producing a resin composition molded body according to any one of supplementary notes 1 to 16, wherein in the water washing treatment, the plastic waste is pulverized to obtain coarse plastic particles and simultaneously materials attached to the coarse plastic particles are washed and removed.

(Supplementary note 18)

The method for producing a resin composition molded body according to any one of supplementary notes 1 to 17, wherein the resin composition molded body is molded by extrusion molding of the resin composition powder.

(Supplementary note 19)

The method for producing a resin composition molded body according to any one of supplementary notes 1 to 18, including carrying out a dehydration treatment on the crushed material after the water washing treatment using a compression volume reducer, and pulverizing the crushed material after the dehydration treatment.

(Supplementary note 20)

The method for producing a resin composition molded body according to any one of supplementary notes 1 to 19, including adding at least one of a low melting point resin-containing powder or a non-low melting point resin-containing powder prepared in advance to the resin composition powder and mixing the obtained mixture to obtain a resin composition powder mixture, and molding the resin composition powder mixture.

(Supplementary note 21)

The method for producing a resin composition molded body according to supplementary note 20, wherein the low melting point resin-containing powder contains 60 mass% or more of the low melting point resin.

(Supplementary note 22)

The method for producing a resin composition molded body according to supplementary note 20, wherein the non-low melting point resin-containing powder contains 60 mass% or more of the non-low melting point resin.

(Supplementary note 23)

The method for producing a resin composition molded body according to any one of supplementary notes 1 to 22, including adding a cellulose-based material powder prepared in advance to the resin composition powder and mixing the obtained mixture to obtain a cellulose-based material-containing resin composition powder mixture, and molding the cellulose-based material-containing resin composition powder mixture.

(Supplementary note 24)

The method for producing a resin composition molded body according to any one of supplementary notes 1 to 23, wherein the flexural strength of the resin composition molded body obtained, measured in accordance with method B provided in JIS A 5741:2016, is 20 MPa or more.

(Supplementary note 25)

The method for producing a resin composition molded body according to any one of supplementary notes 1 to 24, wherein the area of the hypha developed part after two weeks of the resin composition molded body obtained, measured by method A provided in Annex A of JIS Z 2911:2018 is less than 25% of the whole area.

(Supplementary note 26)

A method for producing a resin composition powder for production of a resin composition molded body, including preparing a plastic waste which includes at least one of a waste plastic residue derived from general waste, waste plastic derived from industrial waste or waste plastic derived from marine plastic waste and which includes a low melting point resin with a melting point in a range of 80°C or higher and lower than 190°C and a non-low melting point resin containing one of a high melting point resin with a melting point of 190°C or higher or a thermosetting resin or both, carrying out a magnetic substance removing treatment and a water washing treatment on the plastic waste or crushed material obtained by crushing the plastic waste, and pulverizing the plastic waste or the crushed material after the water washing treatment to obtain a resin composition powder.

EXPLANATION OF REFERENCE NUMERALS

10: Resin composition powder feeding unit, 11: crusher, 12: magnetic separator, 13: non-magnetic metal separator, 14: washer, 15: compression volume reducer, 16: pulverizer, 17: storage tank, 18: measuring tank, 20: wood powder feeding unit, 21: crusher, 22: magnetic separator, 23: pulverizer, 24: storage tank, 25: measuring tank, 30: low melting point resin powder feeding unit, 31: storage tank, 32: measuring tank, 40: non-low melting point resin powder feeding unit, 41: storage tank, 42: measuring tank, 50: additive feeding unit, 51: storage tank, 52: measuring tank, 60: molded body producing unit, 61: mixer, 62: storage tank, 63: extruder, 100: resin composition molded body producing system.

**Claims**

1.    A method for producing a resin composition molded body, comprising,

Preparing a plastic waste which comprises at least one of a waste plastic residue derived from general waste, waste plastic derived from industrial waste or waste plastic derived from marine plastic waste and which comprises a low melting point resin with a melting point in a range of 80°C or higher and lower than 190°C and a non-low melting point resin comprising at least one of a high melting point resin with a melting point of 190°C or higher or a thermosetting resin,
carrying out a magnetic substance removing treatment and a water washing treatment on the plastic waste or crushed material obtained by crushing the plastic waste, pulverizing the plastic waste or the crushed material after the water washing treatment to obtain a resin composition powder, and
molding the resin composition powder to obtain a resin composition molded body.

2.    The method for producing a resin composition molded body according to claim 1, wherein an amount of the low melting point resin in synthetic resin contained in the waste plastic residue derived from general waste and the waste plastic derived from marine plastic waste is in a range of 5 mass% or more and 80 mass% or less.

3.    The method for producing a resin composition molded body according to claim 1 or 2, wherein the waste plastic residue derived from general waste is a residue after separating and recovering some of the low melting point resin contained in the waste plastic contained in general waste.

4. The method for producing a resin composition molded body according to any one of claims 1 to 3, wherein a ratio of amounts of the non-low melting point resin to the non-low melting point resin in the waste plastic residue derived from general waste is less than 4.00 in mass ratio.

5. The method for producing a resin composition molded body according to any one of claims 1 to 4, wherein production units for the resin composition molded body are separated depending on types of the plastic waste and a standard deviation of an amount of the low melting point resin in synthetic resin contained in the plastic waste used in each production unit is 2 mass% or more.

6. The method for producing a resin composition molded body according to any one of claims 1 to 5, wherein the magnetic substance removing treatment is carried out on crushed material obtained by crushing the plastic waste.

7. The method for producing a resin composition molded body according to any one of claims 1 to 6, wherein a non-magnetic metal removing treatment is carried out between the magnetic substance removing treatment and the water washing treatment.

8. The method for producing a resin composition molded body according to any one of claims 1 to 7, wherein the crushed material is pulverized using a fine pulverizer.

9. The method for producing a resin composition molded body according to any one of claims 1 to 8, wherein the crushed material is pulverized under conditions that the resin composition powder pass through a sieve with an aperture size of 3 mm.

10. The method for producing a resin composition molded body according to any one of claims 1 to 9, wherein in the water washing treatment, the plastic waste is pulverized to obtain coarse plastic particles and simultaneously materials attached to the coarse plastic particles are washed and removed.

11. The method for producing a resin composition molded body according to any one of claims, wherein the resin composition molded body is molded by extrusion molding of the resin composition powder.

12. The method for producing a resin composition molded body according to any one of claims 1 to 11, comprising carrying out a dehydration treatment on the crushed material after the water washing treatment using a compression volume reducer, and
pulverizing the crushed material after the dehydration treatment.

13. The method for producing a resin composition molded body according to any one of claims 1 to 12, comprising adding at least one of a low melting point resin-containing powder or a non-low melting point resin-containing powder prepared in advance to the resin composition powder and mixing an obtained mixture to obtain a resin composition powder mixture, and
molding the resin composition powder mixture.

14. The method for producing a resin composition molded body according to any one of claims 1 to 13, comprising

adding a cellulose-based material powder prepared in advance to the resin composition powder and mixing an obtained mixture to obtain a cellulose-based material-containing resin composition powder mixture, and
molding the cellulose-based material-containing resin composition powder mixture.

15. The method for producing a resin composition molded body according to any one of claims 1 to 14, wherein a flexural strength of a resin composition molded body obtained, measured in accordance with method B provided in JIS A 5741:2016, is 20 MPa or more.

16. The method for producing a resin composition molded body according to any one of claims 1 to 15, wherein an area of a hypha developed part after two weeks of a resin composition molded body obtained, measured by method A provided in Annex A of JIS Z 2911:2018 is less than 25% of a whole area.

17. A method for producing a resin composition powder for production of a resin composition molded body, comprising

preparing a plastic waste which comprises at least one of a waste plastic residue derived from general waste, waste plastic derived from industrial waste or waste plastic derived from marine plastic waste and which comprises a low melting point resin with a melting point in a range of 80°C or higher and lower than 190°C and a non-low melting point resin comprising at least one of a high melting point resin with a melting point of 190°C or higher or a thermosetting resin, carrying out a magnetic substance removing treatment and a water washing treatment on the plastic waste or crushed material obtained by crushing the plastic waste, and

pulverizing the plastic waste or the crushed material after the water washing treatment to obtain a resin composition powder.

# FIG. 1

# FIG. 2

```
        ┌─────────────────────────────┐
        │   Plastic-containing waste   │
        └─────────────────────────────┘
                      │
                      ▼           ⌇S11
        ┌─────────────────────────────┐
        │        Crushing step        │
        └─────────────────────────────┘
                      │
                      ▼           ⌇S12
        ┌─────────────────────────────┐
        │  Magnetic substance removing step  │
        └─────────────────────────────┘
                      │
                      ▼           ⌇S13
        ┌─────────────────────────────┐
        │  Non-magnetic metal removing step  │
        └─────────────────────────────┘
                      │
                      ▼           ⌇S14
        ┌─────────────────────────────┐
        │      Water washing step     │
        └─────────────────────────────┘
                      │
                      ▼           ⌇S15
        ┌─────────────────────────────┐
        │     Volume reduction step   │
        └─────────────────────────────┘
                      │
                      ▼           ⌇S16
        ┌─────────────────────────────┐
        │      Pulverization step     │
        └─────────────────────────────┘
                      │
                      ▼
        ┌─────────────────────────────┐
        │   Resin composition powder   │
        └─────────────────────────────┘
```

# FIG. 3

Resin composition powder

↓ S21

Analysis step

↓ S22

Mixing step ← Wood powder

Low melting point resin-containing powder

Non-low melting point resin-containing powder

↓ S23

Molding step

Additives

↓

Resin composition molded body

## INTERNATIONAL SEARCH REPORT

| International application No. |
| --- |
| **PCT/JP2024/033521** |

### A. CLASSIFICATION OF SUBJECT MATTER

*B29B 11/14*(2006.01)i; *B29B 17/02*(2006.01)i; *B29C 48/00*(2019.01)i
FI: B29B11/14; B29B17/02; B29C48/00

According to International Patent Classification (IPC) or to both national classification and IPC

### B. FIELDS SEARCHED

Minimum documentation searched (classification system followed by classification symbols)

B29B11/14; B29B17/02; B29C48/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2005-66952 A (DAICEL CHEM. IND. LTD.) 17 March 2005 (2005-03-17) claims, paragraphs [0019]-[0076], fig. 1 | 17 |
| Y | | 1-16 |
| Y | JP 7-227849 A (MITSUBISHI SHOJI PLASTICS CORPORATION) 29 August 1995 (1995-08-29) paragraphs [0007]-[0021] | 1-16 |
| Y | JP 2022-72351 A (TSURUOKA KK) 17 May 2022 (2022-05-17) claims, paragraphs [0065]-[0066], fig. 2 | 10 |
| A | KR 10-2022-0002779 A (POSCO) 07 January 2022 (2022-01-07) entire text | 1-17 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/033521**

| Patent document cited in search report | | | Publication date (day/month/year) | Patent family member(s) | Publication date (day/month/year) |
|---|---|---|---|---|---|
| JP | 2005-66952 | A | 17 March 2005 | (Family: none) | |
| JP | 7-227849 | A | 29 August 1995 | (Family: none) | |
| JP | 2022-72351 | A | 17 May 2022 | (Family: none) | |
| KR | 10-2022-0002779 | A | 07 January 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001353707 A

- JP 2005066952 A

**Non-patent literature cited in the description**

- Flowchart of plastic products, plastic waste and resource recovery. *Plastic Waste Management Institute*, 2020, https://www.pwmi.or.jp/flow_pdf/-flow2020.pdf